# FASCICULE DE BREVET EUROPEEN

(11) **EP 1 124 041 B1**
(45) Date de publication et mention de la délivrance du brevet: **25.05.2005**
(21) Numéro de dépôt: 01400104.4
(22) Date de dépôt: 15.01.2001
(51) Int. Cl.: F01N 9/00, F02D 41/02, F02D 41/40, F02D 21/08

(54) **Système d'aide à la régénération d'un filtre à particules intégré dans une ligne d'échappement d'un moteur Diesel**
Steuerungssystem für die Regenerierung eines Partikelfilters für den Auspuff eines Dieselmotors
Regeneration control system for a diesel engine exhaust particulate filter

(30) Priorité: 20.01.2000 FR 0000708
(43) Date de publication de la demande: 16.08.2001
(73) Titulaire: Peugeot Citroen Automobiles SA, 92200 Neuilly sur Seine (FR)
(72) Inventeur: Salvat, Olivier, 75010 Paris (FR); Le Tallec, Patrice, 78500 Sartrouville (FR)
(74) Mandataire: Habasque, Etienne Joel Jean-François

(56) Documents cités:
- DE-A- 4 234 841
- FR-A- 2 540 558
- FR-A- 2 774 421
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- PATENT ABSTRACTS OF JAPAN vol. 014, no. 556 (M-1057), 11 décembre 1990 (1990-12-11) & JP 02 238161 A (NISSAN MOTOR CO LTD), 20 septembre 1990 (1990-09-20)
- PATENT ABSTRACTS OF JAPAN vol. 1995, no. 01, 28 février 1995 (1995-02-28) & JP 06 280685 A (TOYOTA MOTOR CORP), 4 octobre 1994 (1994-10-04)

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de recyclage des gaz d'échappement comprennent une électrovanne proportionnelle dont le fonctionnement est piloté par les moyens de contrôle en fonction d'informations délivrées par une sonde Lambda λ proportionnelle intégrée dans la ligne d'échappement, pour réguler le recyclage des gaz d'échappement en fonction de la teneur en oxygène de ceux-ci, lors de la phase de régénération du filtre.

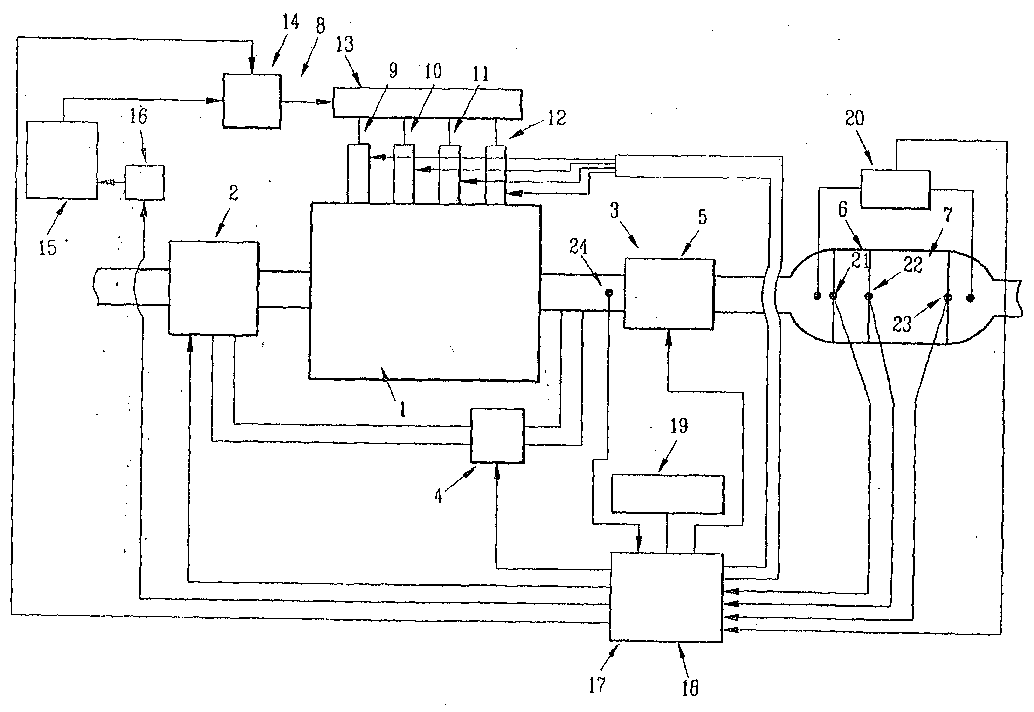

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci.

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d'échappement

Le moteur est également associé à un système d'alimentation commune en carburant des cylindres de celui-ci. Ce système est désigné par la référence générale 8 sur cette figure et comporte par exemple des injecteurs à commande électrique associés à ces cylindres

.Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à de moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule, de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ proportionnelle désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Avantageusement, les moyens 4 de recyclage des gaz d'échappement du moteur en entrée de celui-ci comprennent une électrovanne proportionnelle qui est pilotée par les moyens de contrôle 17 en fonction des informations délivrées par la sonde Lambda λ 24, pour réguler le recyclage des gaz en fonction de la teneur en oxygène des gaz d'échappement, lors de la phase de régénération du filtre à particules.

Ceci permet alors notamment de mieux contrôler le déroulement de la régénération du filtre par combustion des particules.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour piloter le fonctionnement du moteur, ces moyens étant en outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** les moyens (4) de recyclage des gaz d'échappement comprennent une électrovanne proportionnelle dont le fonctionnement est piloté par les moyens de contrôle (17) en fonction d'informations délivrées par une sonde Lambda λ proportionnelle (24), disposée en entrée du moteur, pour réguler le recyclage des gaz d'échappement en fonction de la teneur en oxygène des gaz en entrée du moteur, lors de la phase de régénération du filtre à particules (7).

## Patentansprüche

1. Hilfssystem zur Regeneration eines in einer Auspuffleitung eines Kraftfahrzeug-Dieselmotors integrierten Partikelfilters, welches unterschiedliche zum Motor zugehörige Bauteile aufweist, wie:
- Mittel (2) zum Einlassen von Luft in den Motor,
- Mittel (4) zum Rückführen der Abgase des Motors zum Einlass desselben,
- einen Turboverdichter (5),
- einen Oxidationskatalysator (6), welcher in der Auspuffleitung stromaufwärts des Partikelfilters (7) angeordnet ist,
- ein System (8) zum gemeinsamen Kraftstoffversorgen der Zylinder des Motors, welches elektronisch gesteuerte Injektoren (9, 10, 11, 12) aufweist, welche den Zylindern zugeordnet sind,
- Mittel (16) zum Hinzufügen von einem Additiv zum Kraftstoff, welches bestimmt ist, sich an dem Partikelfilter (7) anzulagern zum Absenken der Verbrennungstemperatur der in demselben abgeschiedenen Partikel,
- Mittel (20, 21,22, 23, 24) zum Erfassen von Informationen, welche sich auf unterschiedliche Funktionsparameter des Motors und der zugeordneten Bauteile desselben beziehen, **dadurch gekennzeichnet, dass** es Mittel (17) aufweist zum Steuern der Funktion der Einlassmittel (2), der Rückführmittel (4), des Turboverdichters (5) und/oder des Versorgungssystems (8) zum Steuern der Funktion des Motors, wobei jene Mittel unter anderem zum Auslösen einer Regenerationsphase des Partikelfilters (7) durch Verbrennen der abgeschiedenen Partikel in demselben eingerichtet sind, indem eine Phase von mehrfachen Kraftstoff-Injektionen in die Motorzylinder während ihrer Expansionsphase eingeschaltet wird, und dass die Abgas-Rückführmittel (4) ein entsprechendes, am Motoreinlass angeordnetes Elektroventil aufweisen, dessen Funktion von den Steuermitteln (17) gesteuert wird in Abhängigkeit von Informationen, welche von einer entsprechenden Lambda-λ-Sonde (24) bereitgestellt werden zum Regeln der Rückführung des Abgases zum Einlass des Motors in Abhängigkeit des Sauerstoffgehalts des Gases bei der Regenerationsphase des Partikelfilters (7).

## Claims

1. System of assisting the regeneration of a particlc filter intcgrated into an exhaust pipe of an engine of a diesel motor vehicle comprising various elements connected to the engine, including:
• means (2) for the intake of air into the engine;
• means (4) for rccycling exhaust gas of the engine as inlet therein;
• a turbo-compressor (5);
• an oxidation catalyst (6) disposed upstream of the particle filter (7) in the exhaust pipe:
• a joint feed system (8) for fuel to the cylinders of the engine, comprising electrically controlled injectors (9, 10, 11, 12) connected to these cylinders;
• means (16) for adding an additive to the fuel to be deposited in the particle filter (7) to lower the combustion temperature of the particles trapped therein;
• means (20, 21, 22, 23, 24) for acquiring data relating to various operating parameters of the engine and elements connected thereto,
**characterised in that** it comprises means (17) for controlling the operation of thc intake means (2), the recycling means (4), the turbo-compressor (5) and/or the feed system (8) to control the operation of the engine, these means being additionally adjusted to actuate a regeneration phase of the particle filter (7) by combustion of the particles trapped therein by actuating a phase of multiple injections of fuel in the cylinder of the engine during their relief phase, and **in that** the means (4) for recycling the exhaust gases comprise a proportional solenoid valve, the operation of which is controlled by the control means (17) in dependcnce on data supplicd by a proportional lambda λ probe (24) disposed at the inlet to the engine to regulate the recycling of the exhaust gases in dependence on the oxygen content of the gases at the inlet of the engine during the regeneration phase of the particle tilter (7).
